**Europäisches Patentamt**

**European Patent Office**

**Office européen des brevets**

(19)

(11) Veröffentlichungsnummer: **0 416 103 A1**

## (12) EUROPÄISCHE PATENTANMELDUNG
### veröffentlicht nach Art. 158 Abs. 3 EPÜ

(21) Anmeldenummer: **89904298.0**

(22) Anmeldetag: **17.02.89**

(86) Internationale Anmeldenummer:
**PCT/SU89/00042**

(87) Internationale Veröffentlichungsnummer:
**WO 90/09290 (23.08.90 90/20)**

(51) Int. Cl.⁵: **B60B 3/02**

(43) Veröffentlichungstag der Anmeldung:
**13.03.91 Patentblatt 91/11**

(84) Benannte Vertragsstaaten:
**AT DE FR GB IT SE**

(71) Anmelder: **DNEPROPETROVSKY METALLURGICHESKY INSTITUT**
**pr. Gagarina, 4**
**Dnepropetrovsk, 320635(SU)**

(72) Erfinder: **ESAULOV, Vasily Petrovich**
**ul. Chernyshevskogo, 15-18**
**Dnepropetrovsk, 320005(SU)**
Erfinder: **ALIMOV, Anatoly Andreevich**
**ul. Kuibysheva, 8a-5**
**Dnepropetrovsk, 320021(SU)**
Erfinder: **ESAULOV, Alexandr Trofimovich**
**pr. K.Marxa, 55-37**
**Dnepropetrovsk, 320030(SU)**
Erfinder: **KLIMENKO, Felix Konstantinovich**

**nab. Pobedy, 48-81**
**Dnepropetrovsk, 320094(SU)**
Erfinder: **SHEVCHENKO, Evgeny Ivanovich**
**pr. K.Marxa, 70-12**
**Dnepropetrovsk, 320070(SU)**
Erfinder: **KOZLOVSKY, Alfred Ivanovich**
**ul. Reshetilovskaya, 22-7**
**Dnepropetrovsk, 320026(SU)**
Erfinder: **STAROSELETSKY, Mikhail Iliich**
**pr. Vorontsova, 77-232**
**Dnepropetrovsk, 320081(SU)**
Erfinder: **KRASNOBAEV, Jury Vasilievich**
**ul. Bibikova, 39-6**
**Dnepropetrovsk, 320019(SU)**

(74) Vertreter: **Füchsle, Klaus, Dipl.-Ing. et al**
**Hoffmann . Eitle & Partner Patentanwälte**
**Arabellastrasse 4**
**W-8000 München 81(DE)**

(54) **EISENBAHNRAD.**

(57) Erfindungsgemäss ist der geradlinige Abschnitt der Mittellängsachse des Scheibenprofils eines Eisenbahnrades auf der Felgenseite mit dem ersten krummlinigen Abschnitt verbunden, der durch eine folgende Beziehung charakterisiert ist:

$$y = -0,0074x^3 + 0,4120x^2 - 7,2500x + 38,7000 \quad ,$$

welcher Abschnitt mit einem zweiten krummlinigen Abschnitt verbunden ist, der durch eine folgende Beziehung charakterisiert ist:

$$y = -0,0009x^3 + 0,0658x^2 - 1,3140x + 5,5592 \quad ,$$

welcher Abschnitt in einen dritten krummlinigen Abschnitt übergeht, der durch eine folgende Beziehung charakterisiert ist:

$$y = -0,129x^2 + 0,0335x - 0,9800 \quad ,$$

und auf der Nabenseite mit dem geradlinigen Abschnitt verbunden ist, während die Abszissen der Punkte innerhalb folgender Intervalle liegen: für den ersten Abschnitt:

$$0,379 \; D - \frac{d}{2} \; \geq \; x \; \geq \; 0,287 \; D - \frac{d}{2} \quad ,$$

für den zweiten Abschnitt:

$$0,287 \; D - \frac{d}{2} \; \geq \; x \; \geq \; 0,248 \; D - \frac{d}{2} \quad ,$$

für den dritten Abschnitt:

$$0,248 \; D - \frac{d}{2} \; \geq \; x \; \geq \; 0,150 \; D - \frac{d}{2} \quad ,$$

wo x und y laufende Koordinaten sind,
    D      den Laufflächendurchmesser und
    d      den Nabenaussendurchmesser bedeutet.

FIG. 1

## EISENBAHNRAD

Technisches Gebiet

Die Erfindung bezieht sich auf das Gebiet des Transportmaschinenbaus, insbesondere auf die Kontruktionen von Rädern für Eisenbahnfahrzeuge (Schienenfahrzeuge).

Zugrundeliegender Stand der Technik

Weit bekannt sond Räder, deren Scheiben eine Hülle dastellen, die aus einem System von miteinander verbundenen Hüllen flacher, kegeliger bzw. krummliniger Form besteht. Durch Ändern der Anzahl der verbundenen Hüllen und Variieren der gegenseitigen Anordnung derselben sowie der Neigungswinkel der Profil-Mittellängsachse wird versucht, verschiedene konstruktive Verfahren zur Erhöhung der Ermüdungs- und der dynamischen Festigkeit der Räder zu realisieren, was von verschiedenen Urhebern vorgeschlagen wurde. Dabei werden die folgenden wichtigsten Spannungen und deren Kombinationen beachtet:
- von vertikalen Kräften her, die in der Laufkreisebene wirksam sind;
- vom Seitendruck der Schiene auf den Radspurkranz her;
- von einer Kombination der genannten Kräfte her;
- von einer ungleichmässigen Raderhitzung bei Backen- und Schiebenbremsung her.

Die meiste Verbreitung hat die Kontruktion eines Rades gefunden, das eine Felge und eine Nabe enthält, welche mit einer zwischen ihnen befindlichen Scheibe berbunden sind, deren Profil-Mittellängsachse eine geneigte Gerade darstellt, wobei die Scheibe geradlinige Erzeugenden besitzt, die mit den Felgen- und Nabenprofilen durch Halbmesserkurven verbunden sind, wobei die Verbindung auf der Felgenaussenseite bzw. auf der Nabenunnenseite durch zwei untereinander verbundene Halbmesserkurven der Gegenkrümmung hergestellt ist.

Dieses Rad hat folgende Nachteile:
- eine grosse vertikale und axiale Scheibensteifigkeit;
- erhebliche technologische Restspannungen in den Übergangszonen von der Scheibe zur Felge und zur Nabe;
- ernöhte alterrierende Betriebs-Beanspruchungen in den genannten Übergangszonen;
- eine Verlagerung der Nabe in der axialen Richtung relativ zur ursprünglichen Stellung bei lang andauerndem Bremsen;
- niedrige Fertigungsgerechtheit dieser Scheibe beim Gesenkschmieden und Biegen.

Eine konstruktive Verbesserung der Räder der beschriebenen Bauart ist deswegen unmöglich, weil zur Erhöhung der Ermüdungs- und dynamischen Festigkeit derselben die einzig mögliche Massnahme in der Verstärkung der Übergangszonen von der Scheibe zur Felge und zur Nabe besteht, was wiederum zur weiteren Erhöhung der Steifigkeit dieses Rades und somit ·zur Vermehrung sämtlicher vorgenannten Nachteile bei grösserer Metallintensität führt.

Bekannt ist eine Konstruktion eines Eisenbahnrades (SU, A, 1109324), das eine Felge und eine Nabe enthält, die mit einer zwischen ihnen liegenden Scheibe verbunden sind, deren Profil-Mittellängsachse auf der Felgenseite aus einem vertikalen geradlinigen Abschnitt und auf der Nabenseite aus einem geneigten geradlinigen Abschnitt mit einem zwischen ihnen befindlichen krummlinigen Abschnitt besteht, der sich aus zwei Halbmesserkurven der Gegenkrümmung zusammensetzt, wobei die krummlinigen Erzeugenden der Scheibe mit den Felgen- und Nabenprofilen durch Halbmesserkurven verbunden sind, während die beim Schneiden der Scheibe durch axiale zylindrische Oberflächen entstehenden Flächen gleich gross sind und die Mittellängsachse des Scheibenprofils an der Nabe in bezug auf die Mittellängsachse des Nabenprofils nach der Innenseite des Rades hin verlagert ist.

Dieses Rad besitzt ebenfalls erhebliche Nachteile, nämlich eine grössere radiale Steifigkeit und grössere technologische Restspannungen, recht hoch sind auch tangentiale und radiale Spannungen in den Übergangszonen, und vor allem entsteht bei lang andauerndem Bremsen ein starker Spannungszustand in der Scheibe.

Offenbarung der Erfindung

Der vorliegenden Erfindung liegt die Aufgabe zugrunde, eine solche Konstruktion des Eisenbahnrades zu entwickeln, in der die Konfiguration des Scheibenprofils einen gegenseitigen Ausgleich von im Rad beim Einwirken der komplexen Belastung entstehenden Spannungen gewährleisten würde.

Die gestellte Aufgabe ist dadurch gelöst, dass im Eisenbahnrad, das eine Felge und eine Nabe enthält, die mit einer zwischen ihnen befindlichen Scheibe verbunden sind, deren Profil-Mittellängsachse geradlinige Abschnitte aufweist, zwischen denen krummlinige Abschnitte liegen, wobei die Scheibe krummlinige Erzeugenden besitzt, die mit den Felgen- und Nabenprofilen durch Halbmesserkurven verbunden sind, deren Halbmesser sich aus der Beziehung

$$R = (0,04 - 0,06) D \qquad\qquad /1/$$

errechnet, während die Scheibenquerschnittsflächen, die von mit der Nabe gleichachsigen zylindrischen Schnittflächen gebildet sind, gleich gross sind und der Verbindungspunkt der Scheibe mit der Nabe gegenüber der Mitte der letzteren berlagert ist, wobei der geradlinige Abschnitt der Mittellängsachse des Scheibenprofils auf der Felgenseite mit dem ersten krummlinigen Abschnitt verbunden ist, der durch eine folgende Beziehung charakterisiert ist:

$$y = - 0,0074x^3 + 0,4120x^2 - 7,2500x + 38,7000 \qquad /2/$$

welcher Abschnitt mit einem zweiten krummlinigen Abschnitt verbunden ist, der durch eine filgende Beziehung charakterisiert ist:

$$y = - 0,0009x^3 + 0,0658x^2 - 1,3140x + 5,5592 \qquad /3/,$$

welcher Abschnitt in einen dritten krummlinigen Abschnitt übergeht, der durch eine folgende Beziehung charakterisiert ist:

$$y = -0,0129x^2 + 0,0335x - 0,9800 \qquad\qquad /4/$$

und der mit dem auf der Nabenseite liegenden geradlinigen Abschnitt verbunden ist, welcher zur Mitellängsachse des Nabenprofils parallel und relativ zur Nabe nach der Aussenseite des Rades hin um einen Betrag

$$0,19\,1 \leqslant H \leqslant 0,21\,L \qquad\qquad /5/$$

verlagert ist, wo x und y laufende Koordinaten sind, deren Ursprung im Schnittpunkt der Laufkreisprojektion mit der Erzeugenden eines Zy inders liegt, der einen Durchmesser besitzt, welcher dem Nabenaussendurchmesser gleich ist, wobei die Ab zissen der Punkte der jeweiligen krummlinigen Abschnitte innerhalb folgender Intervalle liegen:

für den ersten krummlinigen Abschnitt:

$$0,379\,D - \frac{d}{2} \geqslant x \geqslant 0,287\,D - \frac{d}{2} \qquad\qquad /6/$$

für den zweiten krummlinigen Anschnitt:

$$0,287\,D - \frac{d}{2} \geqslant x \geqslant 0,248\,D - \frac{d}{2} \qquad\qquad /7/$$

für den dritten krummlinigen Abschnitt:

4

$$0,248\ D - \frac{d}{2}\ \geq\ x\ \geq\ 0,150\ D - \frac{d}{2} \qquad\qquad /8/$$

wo es dedeutet:

D - Laufflächendurchmesser,

L - Nabenlänge,

H - Verlagerungsgrösse der Scheibe in bezug auf die Nabenmitt,

d - Nabenaussendurchmesser.

Das gemäss den angeführten Patentansprüchen ausgeführte Eisenbahnrad erbrachte bei durchgeführten Betrieserprobungen eine Spannungsreduktion in den am meisten beanspruchten Zonen durchschnittlich um das Doppelte, wobei die Wahrscheinlichkeit des Radverschiedbung von der Nabe beim Bremsen um ein Drittel vermindert ist.

Kurze Beschreibung der Zeichnungen

Nachstehend wird die Beschreibung eines konkreten Ausführungsbeispiels des erfindungsgemässen Eisenbahnrades unter Bezugnahme auf beiliegende Zeichnungen angeführt, in denen es zeigt:

Fig. 1 das Profil des erfindungsgemässen Eisenbahnrades;

Fig. 2 den Profilaufbau des erfindungsgemässen Eisenbahnrades;

Fig. 3 die Spannungsverteilung in der Scheibe des erfindungsgemässen Eisenbahnrades;

Fig. 4 die Spannungsverteilung in der bekannten flachkegeligen Scheibe;

Fig. 5 die Spannungsverteilung in der bekannten krummlinigen Scheibe.

Beste Ausführungsform der Erfindung

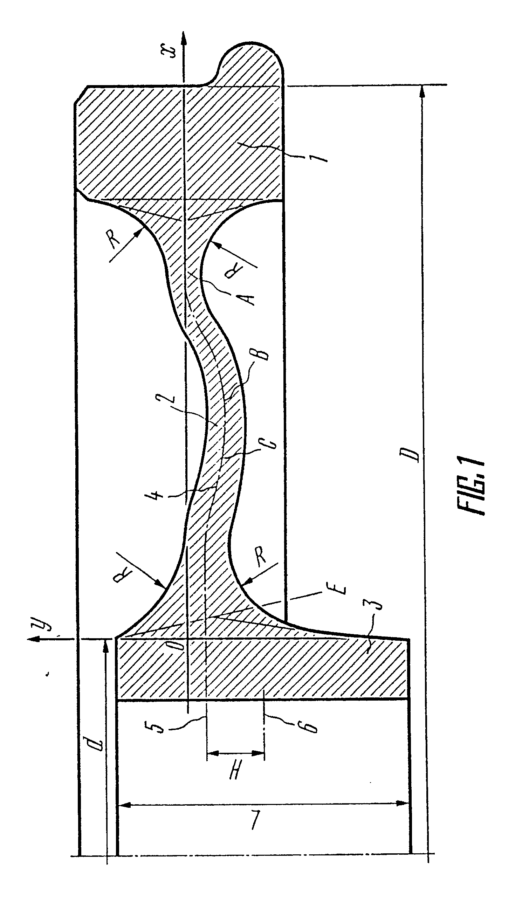

Das Rad (Fig. 1) besteht aus einer Felge 1, einer Scheibe 2 und einer Nabe 3. Das Profil der Scheibe 2 ist mit den Profilen der Felge 1 und der Habe 3 durch Halbmesserkurven mit einem Halbmesser von 0,04 D bis 0.06 D verbunden, während der krummlinigen Scheibenprofilteil aus drei Abschnitten besteht, die durch folgende Beziehungen charakterisiert sind:

Der erste Abschnitt AB:

$$y = -0,0074x^3 + 0,4120x^2 - 7,2500x + 38,7000 \quad /1/\ /2/$$

Der zweite Abschnitt BC:

$$y = -0,0009x^3 + 0,0658x^2 - 1,3140x + 5,5592 \quad /2/\ /3/$$

Der dritte Abschnitt CE:

$$y = -0,0129x^2 + 0,0335x - 0,9800 \qquad\qquad /3/\ /4/.$$

Also stellt AE den krummlinigen Teil der Mittellängsachse 4 dar, wobei der Punkt E im Schnitt der dritten krummlinigen Abschnittes CE mit der Geraden 5 gebildet ist, die zur Mittellängsachse 6 des Profils der Nabe 3 parallel und in bezug auf die Achse 6 nach der Aussenseite des Rades hin um einen Betrag $0,19\ L < H < 0,21\ L$ verlagert ist /5/.

Nachstehend sind Beispiele des Profilsaufbaues des erfindungsgemässen Eisenbahnrades angeführt. Ausgangsdaten für den Aufbau sind:

D - Raddurchmesser,

L - Nabenlänge,

d - Nabenaussendurchmesser,

h - berechnete Scheibenstärke im gefährdeten Querschnitt (Punkt A bzw. Punkt E).

Der Koordinatenursprung liegt gemäss den Patentansprüchen im Schnittpunkt der Laufkreisprojektion

5

und der Erzeugenden eines Zylinders mit einem Durchmesser, der dem Aussendurchmesser d der Nabe 3 gleich ist. Zur Ermittlung des Parameters - des Abstandes von der Geraden 5 bis zur Abszissenachse - wird durch Konstruktion der Verbindungspunkt der Geraden 5 mit der Parabel $y = -0,0129x^2 + 0,0335x - 0,98$ /4/ bestimmt. Die Koordinaten des Punktes E sind durch

$$x_E = 0,150 \ D - \frac{d}{2} \qquad\qquad /9/$$

$$y_E = -S \qquad\qquad /10/$$

eindeutig festgelegt. Beispielsweise sind die Koordinaten des Punktes E bei den Ausgangsdaten: D = 740 mm, d = 220 mm, L = 130 mm, H = 26 mm und R = 40 mm wie folgt errechnet:

$$x_E = 0,15 \cdot 74 - 11 = 0,1 \ (cm) = 1,0 \ mm$$

$$y_E = -0,0129(0,1)^2 + 0,0335 \cdot 0,1 - 0,98 =$$

$$= -0,1 \ (cm) = -1,0 \ mm \ .$$

Danach wird die Mittellängsachse 4 bis zu einem Punkt mit der Abszisse $x_C = 0,248.74 - 11 = 7,35$ cm = = 73,5 mm gemäss derselben Beziehung konstrukert. Im angeführten Fall besitzt der willkürliche Punkt $E_1$ des krummlinigen Abschnittes CE mit der Abszisse

$$x_{E_1} = 50,0 \quad eine \ Ordinate \ von - 11,5. \ Vom \ Punkt \ C \quad bis$$

zum Punkt B mit der Abszisse $x_B = 102,4$ werden die Ordinaten der Punkte gemäss der Beziehung

$$y = -0,0009x^3 + 0,0658x^2 - 1,3140x + 5,5592 \quad /3/$$

errechnet. So besitzt der Punkt $E_2$ mit der

$$x_{E_2} = 88,5 \quad eine \ Ordinate \quad y_{E_2} = -15,5, \ und \ schliess-$$

Abszisse lich werden im Abschnitt AB die Ordinaten der Punkte gemäss der Beziehung $y = -0,0074x^3 + 0,4120x^2 - 7,25x + + 38,7$ /2/ errechnet. Beispielsweise besitzen die

$$Punkte \ C_1 \ und \ B_1 \ mit \ den \ Abszissen \quad x_{C_1} = 109 \ und$$
$$x_{B_1} = 154,5 \ rechnerische \ Ordinaten \quad y_{C_1} = -9,5 \ und$$
$$y_{B_1} = -22,6.$$

Bei anderen Ausgangsdaten: D = 860 mm, d = 244 mm, L = 155 mm, H = 30 mm und R = 45 mm erhält man:
Koordinaten des Punktes E -

$$x_E = 0,15 \cdot 86 - 12,2 = 0,7 \ cm = 7 \ mm$$

$$y_E = -0,0129(0,7)^2 + 0,0335 \cdot 0,7 - 0,98 =$$

$$= -0,96 \ cm = -9,6 \ mm$$

Koordinaten des Punktes $E_1$ bleiben nach wie vor

$$x_{E_1} = 50, \qquad\qquad y_{E_1} = -11,5,$$

Koordinaten des Punktes $E_2$ -

$$x_{E_2} = 88,5, \qquad\qquad y_{E_2} = -17,0, \quad \text{weil}$$
$$y_{E_2} = -0,0129\,(8,85)^2 + 0,0335 \cdot 8,85 - 0,98 = -1,7 \text{ (cm)}$$

Koordinaten des Punktes $C_1$ -

$$x_{C_1} = 109, \qquad\qquad y_{C_1} = -21,1$$

und Koordinaten des Punktes $B_1$ -

$$x_{B_1} = 154,5, \qquad\qquad y_{B_1} - -23,5 .$$

Wenn nun D = 1080 mm, d = 310 mm, L = 2,33 mm, H = 40 mm und R = 60 mm, so gilt:
Koordinaten des Punktes E bleiben nach wie vor

$$x_E = 7, \qquad\qquad y_E = -9,6,$$

Koordinaten des Punktes $E_1$ bleiben nach wie vor

$$x_{E_1} = 50, \qquad\qquad y_{E_1} = -11,5,$$

Koordinaten des Punktes $E_2$ bleiben nach wie vor

$$x_{E_2} = 88,5, \qquad\qquad y_{E_2} = -17,0,$$

Koordinaten des Punktes $C_1$ -

$$x_{C_1} = 109, \qquad\qquad y_{C_1} = -21,5,$$

Koordinaten des Punktes $B_1$ bleiben nach wie vor

$$x_{B_1} = 154,5, \qquad\qquad y_{B_1} = -23,5 .$$

Die Berechnungen nach den Formeln /1/, /2/, 3/3/ erfolgen in Zentimetern.

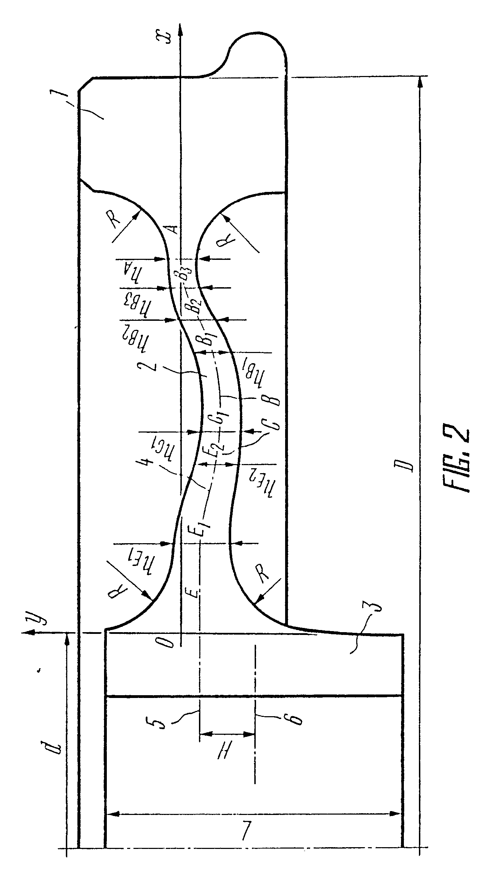

In Fig. 2 sind ausser den Verbundungspunkten der krummlinigen Abschnitte auch Zwischenpunkte $E_1$, $E_2$, $C_1$, $B_1$, $B_2$ und $B_3$ angegeben. Die Scheibenstärken werden gemäss der Bedingung des Gleichgroßseins der Querschnittsflächen der Scheibe errechnet, die durch Schneiden der Scheibe mit axialen zylindrischen Oberflächen über die vorgegebene Dicke im durch einen Punkt A gehenden Schnitt hergestellt werden. Die realen Werte der Scheibenstärke im Punkt A - $h_A$ liegen je nach der Zweckbestimmung der Räder innerhalb eines Intervalls von (15 - 25 mm). Also ist die Ausgangsfläche

$$S_A = 2\pi R_A h_A \qquad\qquad /11/$$

wo $R_A$   den Abstand vom Punkt A bis zur Drehachse des Radsatzes,

$h_A$ die Scheibenstärke im Punkt A bedeutet, so dass demnach die Scheibenstärke im Punkt A bedeutet, so dass demnach die Scheibenstärke $h_x$ in einem willkürlichen Punkt X gemäss der Beziehung

$$h_x = \frac{R_A}{R_x} \cdot h_A \; , \qquad\qquad /12/$$

errechnet wird, wo $R_x$ den Abstand vom Punkt X bis zur Drehachse bedeutet, wobei

$$R_x \geq \frac{d}{2} + R \; , \qquad\qquad /13/$$

wo d   den Nabenaussendurchmesser und

R   den Verbindungshalbmesser der Scheibenerzeugenden mit Felge und Nabe bedeutet.

Da aber $\qquad R_a = \frac{d}{2} + x_A \; , \qquad\qquad /14/$

so gilt:

$$h_x = \frac{\frac{d}{2} + x_A}{\frac{d}{2} + x} \cdot h_A \qquad\qquad /15/$$

Ist beispielsweise $h_A = 16$ mm, so beträgt die

grösste Scheibenstärke $h_{E_1}$ bei $d = 244$ mm, $x_A = 204$ mm

und R = 45 mm maximal 31 mm. Die Scheibenstärke in den Punkten $E_1$, $E_2$, $C_1$ und $B_1$ ist jeweils 31 mm, 24,8 mm, 22,6 mm und 19,1 mm gleich. Das Verbinden des Profils der Scheibe 2 mit den Profilen der Felge 1 und der Nabe 3 geschieht mittels einer mit Hilfe von Halbmesserkurven vorgenommenen Konstruktion.

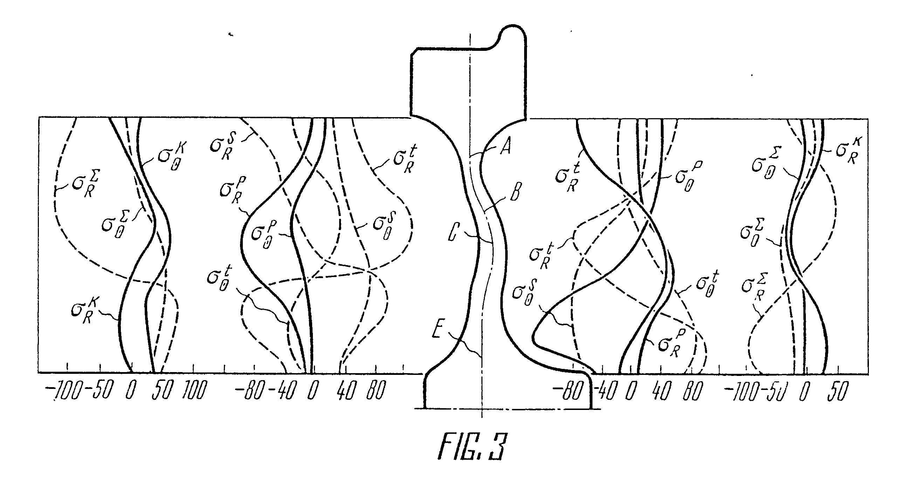

In Fig. 3 s nd verallgemeinerte Diagramme des Spannungszustandes realer Räder gemäss der Erfindung mit gekrümmten Scheiben in radialer Richtung $\sigma_R$ und tangentialer Richtung $\sigma_y$ bei vertikalen Belastungen P = 50 Mp, die in der Laufkreisebene wirksam sind, Seitenbelastungen S = 7,5 Mp und bei während des Bremsvorganges entstehenden Wärmebelastungen dargestellt und Gesamtspannungen $\sigma_R^{\Sigma R}$ und $\sigma_{y<}$ und $\sigma_{y<}$

Beim Rollen des Rades auf der Schiene wird über die Felge 1 eine Belastung seitens der vertikalen Kraft übertragen, die in der Laufkreisebene auf die Scheibe 2 und die Nabe 3 (Fig. 1) wirkt, wobei infolge kinematischer Schwingungen und insbesondere bei der Bewegung des Fahrzeuges in gekrümmten Gleisabschnitten eine vom Seitendruck der Schiene auf den Radspurkranz herrührende Belastung entsteht, die auch auf die Scheibe übertragen wird. Beim Arbeiten des Rades nur unter der Wirkung der vertikalen Belastung P = 50 Mp besitzen Radialspannungen (Fig. 3) $\sigma_K^P$ im Abschnitt AB auf der Innenseite hauptsächlich einen zusammendrückenden Charakter in der Grössenordnung von 50 MPa, auf der Aussenseite aber wirken dabei Druckspannungen in der Grössnordnung von 10 MPa. In den Abschnitten BC und CE wikken auf der Innenseite hauptsächlich Zugspannungen in der Grössenordnung von 50 MPa, auf der Aussenseite aber Druckspannungen, die sich von - 100 MPa in der Scheibenmitte (Mitte des Abschnittes BC) bis zu - 10 MPa in der Übergangszone der Scheibe in die Nabe ändern.

Die Tangentialspannungen $\sigma_{y<}$ der Tangentialspannungen auf der Aussenseite umfasst eine Spanne von 20 bis 50 MPa. Also sieht das theoretisch zu erwartende Bild des Spannungszustandes der Scheibe nach der algebraischen Summierung der von den vertikalen und seitlichen Kräften herrührenden Spannungen folgenderweise aus:

die Innenseite:

Abschnitt AB - Druckspannung - 30 MPa; Abschnitt BC - - Zugspannung - 50 MPa; Abschnitt CE - Druckspannung - - 100 MPa.

die Aussenseite:

Abschnitt AB - Druckspannung - 110 MPa; Abschnitt BC - - Druckspannung - 100 MPa; Abschnitt CE - Zugspannung - - 80 MPa.

Die unmittelbaren Erprobungen der Räder bei gemeinsamer Wirkung vertikaler Belastung P = 50 Mp und seitlicher Belastung S = 7,5 Mp haben ergeben, dass die Radialspannungen auf der Innenseite der Scheibe in golgender Weise verteilt sind: Abschnitt AB - Druckspannung in der Grössenordnung von - 40 MPa, Abschnitt BC - - Zugspannung - 30 MPa, Abschnitt CE - Druckspannung - - 100 MPa; auf der Aussenseite: Abschnitt AB - Druckspannung - 120 MPa, Abschnitt BC - Druckspannung - 120 MPa und Abschnitt CE - Zugspannung - 50 MPa.

Dabei sind die auf der Innenseite der Scheibe in deren oberer Hälfte wirkenden Tangentialspannungen Zugspannungen in der Grössenordnung von 20 MPa, während im übrigen Scheibenteil sie als Druckspannungen in der Grössenordnung von - 40 MPa wirksam sind; auf der Aussenseite ist ein entgegengesetzter Charakter der Tangentialspannungen mit einem Änderungsbereich von - 10 MPa bis zu 50 MPa zu beobachten. Bei einer Erhintzung der Radfelge und über dieselbe der gesamten Scheibe entstehen in der gekrümmten Scheibe infolge der Bremswärme folgende Spannungen:

Innenseite:

Abschnitt AB - Zugspannung in der Grössenordnung von 50 MPa, Abschnitt BC - Druckspannung - 80 MPa, Abschnitt CE - Zugspannung - 100 MPa;

Aussenseite:

Abschnitt AB - Zugspannung in der Grössenordnung von 70 MPa, die im Abschnitt BC auf 130 MPa ansteigt und nach dem Wechsel ihres Vorzeichens im Abschnitt CE einen Betrag von 100 MPa erreicht.

Der Charakter der Tangentialspannungen ist dabei etwa derselbe, aber der Betrag dieser Spannungen ist viel geringer. Wenn man nun die in der Scheibe durch die Wirkung der machanischen Kräfte und der Bremswärme entstehenden Spannungen theoretisch addiert, so erhält man auf der Innenseite jeweilige Beträge von - 40 MPa, 30 MPa, - 20 MPa.

Die praktisch erreichte Entlastung der Scheibe unter Bedingungen eines lang andauernden Bremsens wird durch Betriebserprobungen bestätigt, deren Resultate mit den theoretischen Schlussfolgerungen gut übereinstimmen.

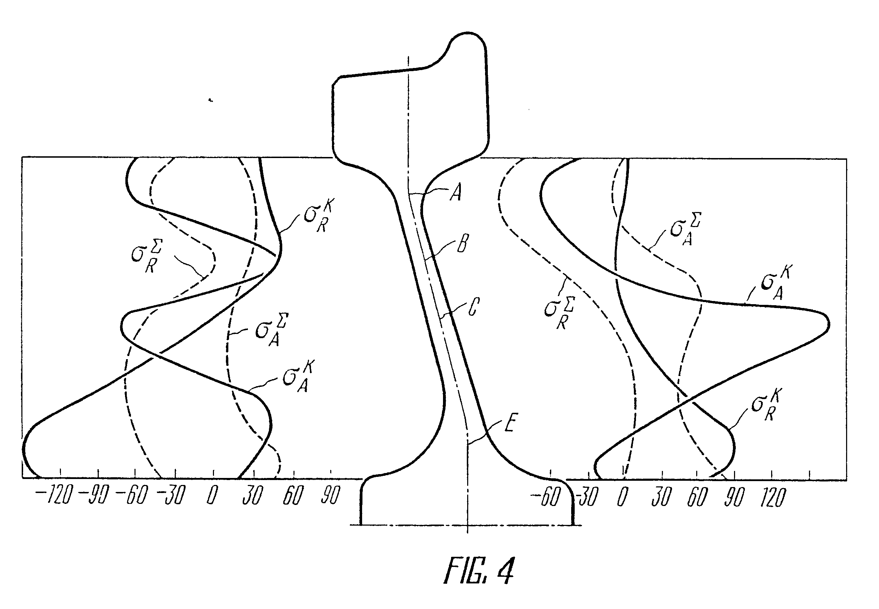

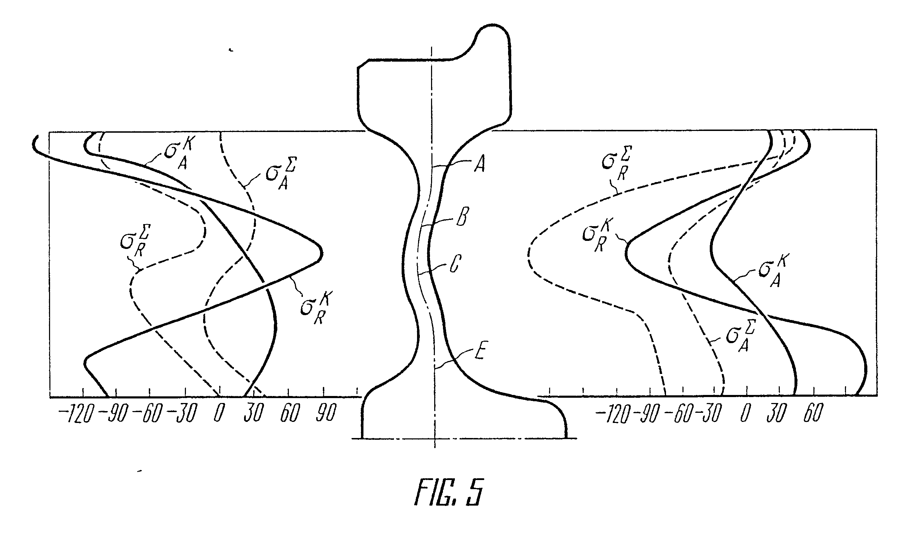

Zur Illustration der Vorteile des erfindungsgemässen Rades sind in Fig. 4 und 5 Spannungszustände der bekannten Radscheiben unter ähnlichen Beanspruchungsbedingungen angeführt. Aus den Diagrammen ist ersichtlich, dass der Änderungsbereich der in den Scheiben der Standardräder auftretenden Spannungen etwa 200 MPa beträgt, im bekannten Rad diesen Wert sogar übertrifft, während er in der Scheibe des erfindungsgemässen Rades fast um das Doppelte kleiner ist und etwa 100 MPa beträgt. Aus dem Gesagten folgt, dass die Räder nach der Erfindung die Aufgabe der Sicherstellung einer optimalen Eisenbahnräderqualität praktisch lösen, weil neben erhöhter, Verkehrssicherheit auch ihre Lebensdauer beträchtlich zunimmt, die Metallintesität und der Herstellungsaufwand aber erheblich reduziert werden können.

Die Verlagerung der Mittellanägsachse der Scheibe nach der dem Radspurkranz entgegengesetzten Seite in bezug auf die Nabenmitte ist dadurch bedingt, dass bei einem Rad mit flachkegeliger Scheibe die Hälfte der Länge L der Sitzstelle des Rades auf der Achse von der Scheibe als von einem Kalibrierring um die Grösse des Übermasses verformt wird, während diese Verformung beim bekannten, als Prototyp gewählten Rad mehr als die Hälfte dieser Länge betrifft. Dabei sind die an der Nabe auf der Aussenseite des angemeldeten Rades wirkenden Spannungen $\sigma_{re}$

## Ansprüche

Eisenbahnrad, das eine Felge (1) und eine Nabe (3) enthält, die mit einer zwischen ihnen befindlichen Scheibe (2) verbunden sind, deren Profil-Mittellängsachse (4) geradlinige Abschnitte aufweist, zwischen denen krummlinige Abschnitte liegen, wobei die Scheibe (2) krummlinige Erzeugenden besitzt, die mit den Felgen- und Nabenprofilen durch Halbmesserkurven verbunden sind, deren Halbmesser sich nach einer folgende Beziehung errechnet:

$$R = (0,04 - 0,06) \, D \, , \qquad\qquad /1/$$

wobei die von mit der Nabe (3) gleichachsigen zylindrischen Schnittflächen gebildeten Querschnittsflächen der Scheibe (2) gleich gross sind, während der Verbindungspunkt der Mittellängsachse (4) des Profils der Scheibe (2) mit einem geraden Abschnitt (5) gegenüber der Mitte der Nabe (3) verlagert ist, dadurch **gekennzeichnet,** dass der geradlinige Abschnitt der Mittellängsachse des Scheibenprofils auf der Felgenseite mit dem ersten krummlinigen Abschnitt verbunden ist, der durch eine folgende Beziehung charakterisiert ist:

$$y = -0,0074x^3 + 0,4120x^2 - 7,2500x + 38,7000 \, , \qquad /2/$$

welcher Abschnitt mit einem zweiten krummlinigen Abschnitt verbunden ist, der durch eine folgende Beziehung charakterisiert ist:

$$y = -0,0009x^3 + 0,0658x^2 - 1,3140x + 5,5592 \, , \qquad /3/$$

welcher Abschnitt in einen dritten krummlinigen Abschnitt übergeht, der durch eine folgende Beziehung charakterisiert ist:

$$y = -0,0129x^2 + 0,0335x - 0,9800 \, , \qquad\qquad /4/$$

und der mit dem auf der Nabenseite liegenden geradlinigen Abschnitt verbunden ist, welcher zur Mittellängsachse des Nabenprofils parallel und in bezug auf die Nabe nach der Aussenseite des Rades hin um einen Betrag

$$0,19 \, L \leqslant H \leqslant 0,21 \, L \qquad\qquad /5/$$

verlagert ist, wo x und y laufende Koordinaten sind, deren Ursprung im Schnittpunkt der Laufkreisprojektion mit der Erzeugenden eines Zylinders liegt, der einen dem Nabenaussendurchmesser gleichen Durchmesser besitzt, wobei die Abszissen der Punkte der jeweiligen krummlinigen Abschnitte innerhalb folgender Intervalle liegen:

für den ersten Abschnitt:

$$0,379 \, D - \frac{d}{2} \geqslant x \geqslant 0,287 \, D - \frac{d}{2} \qquad , \qquad /6/$$

für den zweiten Abschnitt:

$$0,287 \, D - \frac{d}{2} \geqslant x \geqslant 0,248 \, D - \frac{d}{2} \qquad , \qquad /7/$$

für den dritten Abschnitt:

$$0,248 \, D - \frac{d}{2} \geqslant x \geqslant 0,150 \, D - \frac{d}{2} \qquad , \qquad /8/$$

wo es bedeutet:

D - Laufflächendurchmesser,

L - Nabenlänge,

H - Verlagerungsgrösse der Mittellängsachse der Scheibe in bezug auf die Nabenmitte,

d -    Nabenaussendurchmesser.

FIG.1

EP 0 416 103 A1

FIG. 2

FIG.3

FIG. 4

FIG. 5

EP 0 416 103 A1

# INTERNATIONAL SEARCH REPORT

International Application No PCT/SU89/00042

## I. CLASSIFICATION OF SUBJECT MATTER (if several classification symbols apply, indicate all) ⁶

According to International Patent Classification (IPC) or to both National Classification and IPC

| | |
|---|---|
| Int.Cl.5 | B60B 3/02 |

## II. FIELDS SEARCHED

Minimum Documentation Searched ⁷

| Classification System | Classification Symbols |
|---|---|
| Int.Cl.4 | B60B 3/00, 3/02, 9/00 |

Documentation Searched other than Minimum Documentation
to the Extent that such Documents are Included in the Fields Searched ⁸

## III. DOCUMENTS CONSIDERED TO BE RELEVANT⁹

| Category ⁎ | Citation of Document, ¹¹ with indication, where appropriate, of the relevant passages ¹² | Relevant to Claim No. ¹³ |
|---|---|---|
| A | SU, AI, 658013 (DNEPROPETROVSKY METALLURGICHESKY INSTITUT) 14 August 1980 (14.08.80) | 1 |
| A | SU, AI, 1092053 (DNEPROPETROVSKY METALLURGICHESKY INSTITUT) 15 May 1984 (15.04.84) | 1 |
| A | US, A, 4145079 (TRAILER TRAIN COMPANY) 20 March 1979 (20.03.79) | 1 |
| A | DE, BI, 2331788 (KLOCKNER-WERKE AG) 8 August 1974 (08.08.74) | 1 |

⁎ Special categories of cited documents: ¹⁰

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 12 October 1989 (12.10.89) | 30 October 1989 (30.10.89) |

| International Searching Authority | Signature of Authorized Officer |
|---|---|
| ISA/SU | |

Form PCT/ISA/210 (second sheet) (January 1985)